(19)

**Europäisches Patentamt**
**European Patent Office**
**Office européen des brevets**

(11) **EP 3 147 063 B1**

(12) **EUROPEAN PATENT SPECIFICATION**

(45) Date of publication and mention
of the grant of the patent:
**23.12.2020 Bulletin 2020/52**

(51) Int Cl.:
***B23H 7/26*** *(2006.01)*     *B23H 1/02* *(2006.01)*

(21) Application number: **15186617.5**

(22) Date of filing: **24.09.2015**

(54) **DEVICE AND METHOD FOR MULTICHANNEL EDM**

VORRICHTUNG UND VERFAHREN FÜR MEHRKANALIGE FUNKENEROSION

DISPOSITIF ET PROCÉDÉ D'ÉLECTROÉROSION MULTICANAL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**29.03.2017 Bulletin 2017/13**

(73) Proprietor: **Agie Charmilles SA**
**6616 Losone (CH)**

(72) Inventors:
• **Bonini, Stefano**
  **6614 Brissago (CH)**
• **Zaccheo, Giovanni**
  **6616 Losone (CH)**

• **Masa, Paolo**
  **6578 Caviano (CH)**
• **Verdi, Michele**
  **6596 Gordola (CH)**

(74) Representative: **Fenner, Seraina et al**
**Georg Fischer AG**
**Amsler-Laffon-Strasse 9**
**8201 Schaffhausen (CH)**

(56) References cited:
**EP-A1- 2 397 250     JP-A- S56 157 922**
**US-A- 4 191 878     US-A- 4 476 369**
**US-A- 5 847 350**

## Description

Field of the Invention

The invention relates to an electrode holder for multichannel electrical discharge machining according to the preamble of claim 1. Such an electrode holder is known from JP S56 157922. Further the invention relates to an electrical discharge machine comprising such a multichannel processing electrode holder.

Background of the Invention

Multichannel machining according to the present invention consists in the electrical discharge machining (EDM) with a plurality of work pieces, or a plurality of electrodes, or both: a plurality of work pieces and a plurality of electrodes. Generally, a plurality of individual discharge gaps are created, whereas each individual gap is served by a generator. The principle of multichannel machining has been proposed very early in the history of EDM, f.i. in US2783411. Multichannel processing is of great relevance in the production environment, where it is essentially used to parallelize the process to the advantage of productivity. A multichannel EDM machine may have common or individual kinematic, process control and generator.

Typical such cases are direct part production applications, where the processed part is not a casting mold but a final part of the production chain: drilling of injector nozzle holes, drilling of cooling holes for vanes and other turbine components, the texturing of rollers by electrical discharge texturing (EDT), etc. In wire electrical discharge machining (WEDM) multichannel processing has been proposed for multi-wire slicing, for slot forming applications, etc.

However multichannel processing is also applicable with mold manufacturing. In fact, also in the case of injection molding there is a steady trend to enhance production by increasing the parallelization, i.e. the number of casted parts produced by each injection cycle. Thus, multichannel processing is also of great relevance in with common standard electrical discharge machining applications.

Beside the scope of process parallelization, in certain applications multichannel processing is suitable to achieve better technological results. It is known that a factor limiting the surface quality which can be obtained by EDM is the machining surface area. Moreover the machining surface area determines the electrode wear. This is due to the fact that the work piece and the electrode separated by an inter-electrode space (Gap) represent a capacitor which is part of the discharge circuit. The energy storage of said capacitor is proportional to the surface area of the electrode / work piece pairing. The main consequence is that with each voltage variation, especially at the beginning of the discharge, an unwanted additional current discharge adds to the desired discharge, thus changing its physical characteristics, the removal rate, electrode wear, and Gap distance. By dividing the electrode into electrically separated partial electrodes such as disclosed in DE19540352, the engaged electrode surface area and thus the relevant capacitance is proportionally reduced. The electrically insulated partial electrodes are individually connected to the generator, so that the partial areas of the work piece are machined by the partial electrodes. With a smaller capacitance the wear of the electrode is reduced and improved process stability is achieved.

The capacitance is calculated with the formula for plate capacitors, as follows:

$$C = \varepsilon_R \varepsilon_0 \frac{A}{Gap}$$

where

C is the capacitance, in Farads;
A is the electrode area, in square meters;
$\varepsilon_R$ is the dielectric constant of the processing liquid in the Gap;
$\varepsilon_0$ is the electric constant; and
Gap is the inter-electrode distance, in meters;

JP 56157922 describes an electrode holding tool mounted to a supporting shaft indexably and turnably. In sides of a hexagonal panel part of the electrode holding tool, electrode mounting seats are provided, to each of which a machining liquid supply line is radially communicated from a shaft hole in the center of the supporting shaft, and machining electrodes are mounted, and to each of the stripe shaped and pipe shaped electrodes, power is separately fed from power distributing rings.

As said it is possible to provide more than one generator, for instance one for each partial electrode. The evolution of electronics leads to a steady higher generator power density and increased efficiency, so that the accommodation of the boards is simplified. Providing a plurality of machine integrated generators for multichannel die-sinking EDM becomes more and more interesting.

An even more effective use of the generator is possible if a generator is on during a fraction 1/n (with n > 2) of the pulse period. In this case one can share the generator on-time between the channels, as described in EP2397250A1 For instance, if the on-time is less than 50%, then two channels can be served with one generator: during the pause of the first channel the generator is switched to the second channel so that the generator can be used by turns on one and the other discharge gap.

Usually multichannel processing is implemented with dedicated machines, specially designed to do always the same or similar specific task. A problem with such dedicated machines is that their manufacturing price is heavily determined by the market volume, becoming excessive with low quantities. Even worse, their design and development takes a lot of time, sometimes years, becoming risky for the manufacturer or investor. However, recently some applications have emerged in which it would be desirable to perform a multichannel processing with a plurality of universal electrical discharge machines.

Certain molds are composed of arrays of similar or identical cavities and have very high requisites in terms of surface finish; in most cases it is comparably easy to divide an electrode into partial electrodes having same or similar partial area. As far as possible it would make sense to use universal electrical discharge machines, since these machines are flexible, do implement all required features and options, with the latest manufacturers technologies concerning generator, process control, machine design, etc.

Object of the present invention is therefore to provide a device which makes it possible to facilitate the adaptation of standard electrical discharge machines for multichannel processing.

The object is achieved by an electrode holder and an electrical discharge machine in accordance with the features of claim 1.

Summary of the Invention

The inventive electrode holder for multichannel electrical discharge machining can be used with an automatic electrode changer (ATC) and suitable electrode holders, to improve the productivity and/or enhance the surface quality.

A first aspect of the present invention is directed to electrode holder for multichannel electrical discharge machining comprising the features of claim 1.

A second aspect of the present invention is directed to a die-sinking ED machine with such a multichannel electrode holder, the die-sinking electric discharge machine being capable of supplying electric discharge pulses to a plurality of channels, and comprising a current brush assembly, whereas said assembly comprises a plurality of individual current supplying contactors for the supply of the machining current to a respective slip ring.

Further aspects are set forth in the dependent claims, the following description and the drawings. Other features are inherent in the methods and products disclosed or will become apparent to those skilled in the art from the following detailed description of embodiments and its accompanying drawings.

Brief Description of the Drawings

Embodiments of the invention will now be described, by way of example, and with reference to the accompanying drawings. The figures illustrate the following:

Figs. 1-3    Partial sectional views of an electrode holder for multichannel electrical discharge machining according the invention

Fig.4a,b    A possible electrode shape

Fig.5-8    Partial views of the machining head of an ED machine bearing an electrode holder for multichannel electrical discharge machining according the invention

Figs.9-10    Partial sectional views of an electrode holder for multichannel electrical discharge machining according the invention

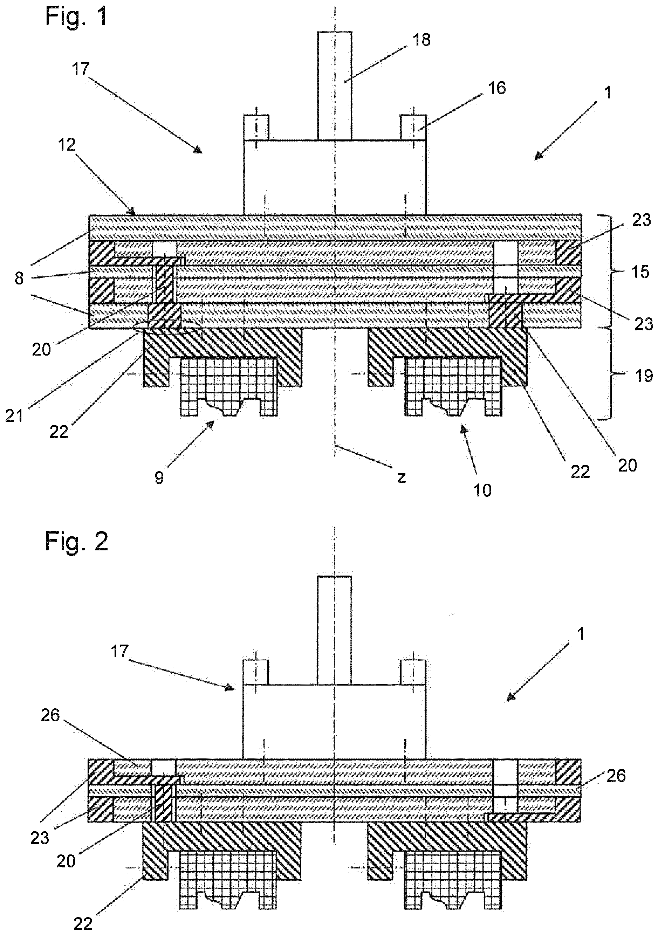

The figure 1 illustrates schematically a possible embodiment of the electrode holder for multichannel electrical discharge machining according the invention. The inventive electrode holder 1 comprises holding elements 17 which are mounted on the top of a central body 15, and an electrode mounting section 19 which is located on the bottom of said central body 15. These constituent parts of the inventive electrode holder will now be described in detail.

The inventive electrode holder 1 comprises on its top, the known and commonly used holding elements 17. The holding elements 17 have the function to hold the electrode holder 1 firmly and detachably fixed to a chuck (not shown) of the machining head in an electrical discharge machine. Part of the holding elements 17 are the so called referencing elements 16 by which the complete electrode holder 1 is precisely positioned on the machine head (not shown) of the electrical discharge machine. The electrode holder 1 further comprises manipulating elements (not shown) by which a fork gripper of an automatic tool changer can grasp the electrode holder 1 for automatic manipulation, e.g. from an electrode magazine to the machine head of an electrical discharge machine and vice versa. The holding elements comprise a drawbar 18 attached axially to the electrode holder 1, by which the electrode holder 1 is clamped in a chuck of the machine head. The referencing elements 16 are made according the state of the art, generally comprising vertical references (Z) in the form of stops, and separate horizontal references (X/Y) in the form of inset features provided in plates being partially elastic in Z direction. By said references 16 the precise and repeatable positioning of the electrode holder 1 with respect to the chuck is achieved.

These holding elements 17 are not described in more detail since they are preferably of standard type, and are available from the known tooling system manufacturers. Additional details regarding the holding elements 17 are illustrated for instance in EP2361713A1.

The electrode holder 1 according the invention comprises at the base of the central body 15, an electrode mounting section 19 by which a plurality of electrical discharge machining electrodes 9, 10 are firmly and precisely positioned. The electrodes 9, 10, 11 are mounted in the desired position and are electrically insulated from each other by an air gap or by insulating elements (not shown). Said electrode mounting section 19 is divided in separate clamping sections 22, on which the electrodes 9, 10 are mounted. The clamping sections 22 can be adapted to the number, size and geometry of the used electrodes.

The electrode holder 1 according to the invention comprises a central body 15, with a plurality of separate internal current supplying circuits 20, being electrically insulated from each other, each circuit 20 leading from the periphery of the electrode holder 1 to a separate current feeder sector 21. The separate current feeder sectors 21 (not shown in detail) are embedded in the base of the central body 15 and represent the terminal of the separate internal current supplying circuits 20. Preferably, the individual clamping sections 22 are fixedly mounted on individual current feeder sectors 21, f.i.by means of screws (not shown). However the current feeder sector 21 may comprise movable contacting means to improve the contact with the clamping sections 22. In a possible embodiment the clamping sections 22 and current feeder sections 21 may be integrated to form one element. The current pulses provided by the generator of the electrical discharge machine (not displayed) are conducted to the electrode mounting section 19, to desired one of a plurality of electrodes used in the multichannel process. Here the term "electrode mounting section" is to be interpreted in the widest possible sense; for instance the electrodes may be clamped, screwed, soldered, etc. to the respective current feeder sectors located at the base of the central body.

In a preferred embodiment of the invention, which is also illustrated in figure 1, the electrode holder 1 for multichannel electrical discharge machining comprises a plurality of slip rings 23 at its periphery. In accordance with the illustrated embodiment, the slip rings 23 can have the form of a ring or of a ring sector and are located at the circular side of the electrode mounting section 19. In this way the slip rings 23 can be contacted by means of an external current feeder.

Each slip ring 23 is connected to a separate current feeder sector 21 of the central body 15 and lastly to the individual electrodes 9, 10 by means of separate internal current supplying circuits 20. In this way the current pulses are conducted across the electrode holder 1 to the individual electrodes 9, 10. Preferably the electrode holder 1 has a slip ring 23 for each channel respectively each electrode 9, 10.

Preferably the slip rings 23 constitute a part of the lateral surface of the electrode holder 1 respectively central body 15; here the slip rings 23 - of preferably same diameter - are stapled vertically and are coaxial aligned to the main axis of the electrode holder 1, electrically separated from each other, for instance by means of insulating discs 8. In this way the slip rings 23 can be contacted from the sides, for instance by means of current brushes or other means.

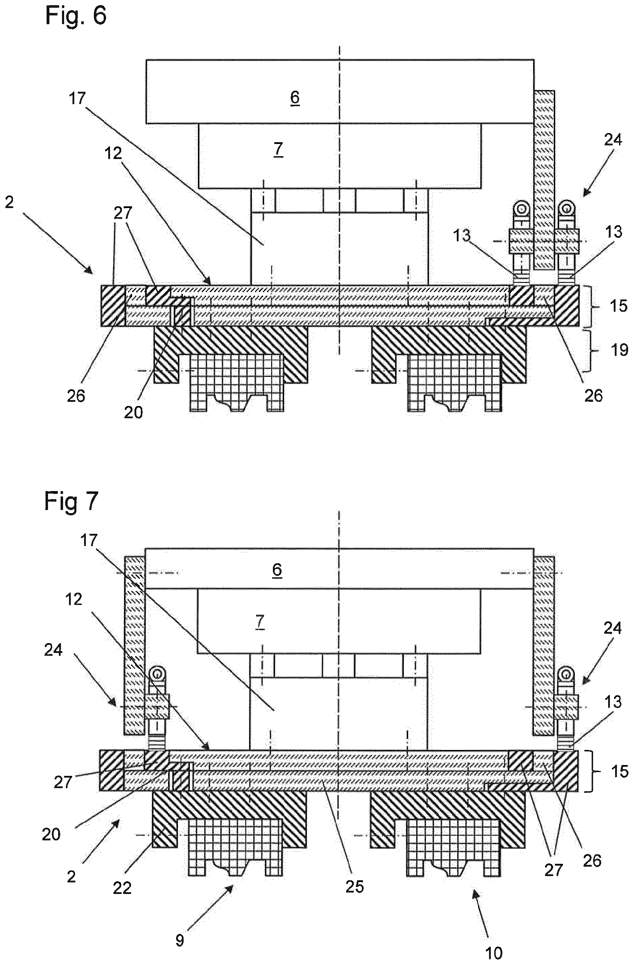

Alternatively, the slip rings 23 may be arranged at the top surface 12 of the central body 15, just below or next to the referencing elements 16, as will be explained further down in respect of figure 6. In such a configuration the slip rings 23 would essentially be arranged in the same plane and coaxial to the main axis Z of the electrode holder 1. They might still have the form of rings or ring sectors of different diameters, obviously suitably electrically separated from each other.

Typically, an electrode holder for multichannel electrical discharge machining according the invention comprises at least the following elements:

- holding elements on the top of the electrode holder, by which the electrode holder is firmly and detachably fixed and precisely positioned on a chuck of a machine head and by which the electrode holder can be grasped by an automatic tool changer;
- a central body comprising two or more internal current supplying circuits, slip rings, insulating elements and current feeder sectors; and
- an electrode mounting section comprising two or more clamping sections with mounted electrodes located at the bottom surface of the central body .

Most die-sinking electrical discharge machines comprise a C-axis, cinematically in series to a Z-axis. By means of said C-axis, the electrode holder can be repositioned, for instance to compensate a misalignment of the electrodes with respect to the machine axes x, y or to set a desired angular position. It can also be used as a servo-controlled axis of the electrical discharge machine, for instance to execute a screw-type or helical machining in which the C- and Z-axis are simultaneously interpolated.

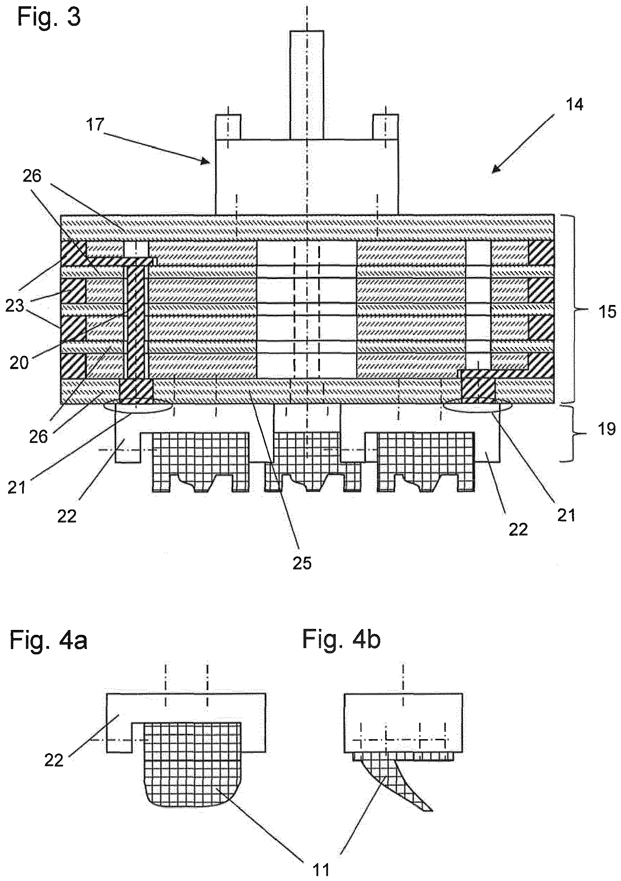

The multichannel electrode holder can also be used to execute a machining in which the C- and Z-axis are simultaneously interpolated. Figure 4a and b show a sloped electrode 11, which is used to form the sloped slots in a cylindrical work piece, such as blisks, blings, or similar work pieces. An electrode holder according the invention may bear two or more such electrodes so as to improve the productivity.

Preferably the electrode holder, respectively its electrode mounting section which includes the slip rings has at least partially cylindrical form. A current brush can be easily brought in contact with the respective slip ring of the electrode holder to conduct the current pulses to the electrode. By the cylindrical constitution of the central body, the rotation of the electrode in C-axis is possible. In this way the machining process can include rotational movement by the electrode holder.

As mentioned, the central body 15 of the electrode holder comprises the internal current supplying circuits 20 and at both ends thereof it has the electrical contacting elements, i.e. slip rings 23 and current feeder sectors 21 by which current pulses are brought to the electrode mounting, respectively to the electrodes. Further, the electrode mounting section comprises insulating elements, preferably having the shape of discs or rings. The electrical components and the insulating elements are mounted together to form a rigid body (compare figures).

The holding elements 17 are located on top of the assembled central body 15 and on the opposite end - respectively at the bottom surface - of the central body 15 the electrode mounting section 19 is allocated with a plurality of mounted electrodes.

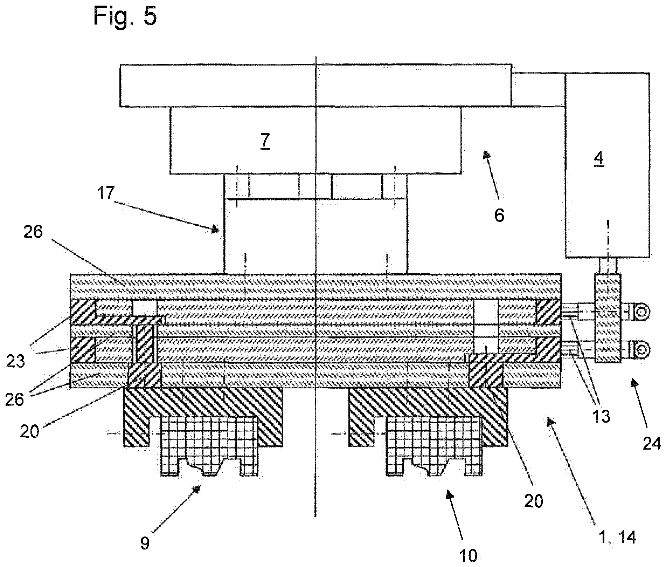

Figures 1, 2, 3 and 5 show different possible versions of electrode holders 1, 14 for multichannel electrical discharge machining according to the invention, in which the slip rings 23 are contacted radially by means of a current brush assembly 24. Here the central body of the electrode holder 1 is constituted by a sequence of axially piled layers, with slip rings 23 separated by insulating discs 26. As shown in figure 5 the current brush assembly 24 comprises a brush 13 for each slip ring 23. The current brushes 13 are mounted on a current brush support 4 which is mounted on the machine head 6.

Preferably the current brush support 4 comprises an actuator, f.i. a cylinder by which the brush assembly is a brought in contact with the slip rings 23 or withdrawn from them. Preferably the current brush assembly 24 comprises one or more springs to press the brushes against the according slip ring 23, to compensate possible concentricity errors of the slip rings 23 and/or to improve the electrical contact. In such a radial configuration, the current brush assembly 24 is preferably mounted laterally to the machine head (or at the rear of the machine head), so that the other side of the machine head remains freely accessible to a gripper of an ATC, and the front side is freely accessible to the operator of the ED machine.

The figures 6, 7 and 8 show another embodiment for an electrode holder for multichannel electrical discharge machining according to the invention. In this version, the slip rings 27 are mounted on the top surface 12 of the central body 15 of the electrode holder 2 and are contacted axially by brushes 13. Here the top surface 12 of the central body 15 of the electrode is constituted by a radial succession of slip ring 27 and insulating rings 26. Preferably the brushes 13 are straightly brought in contact to the slip rings 27 when the electrode holder 2 is positioned into the chuck 7 by means of an ATC or manually; thus with axial configuration of the current brush assembly 24 according figure 6, 7 or 8 there is no need for an additional actuator to contact and withdraw the brushes from the slip rings 27.

In the embodiment displayed in figure 6 the current brush assembly 24 is mounted at one side of the machining head 6. However the current brushes 13 can also be split for instance as illustrated in the figure 7: Here the current brush assemblies 24 are mounted at two sides of the machining head 6 to contact the slip rings 27 on the top surface 12 of the central body 15. In this way the forces exerted by the brushes 13 and springs to contact the slip rings 27 are homogeneously distributed and the electrode holder 2 is not subject to any additional torsion.

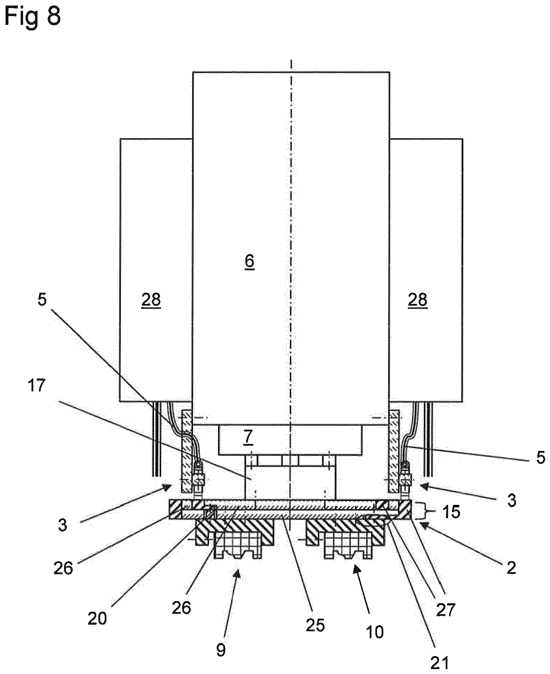

The figure 8 shows a further possible configuration in which the electrode holder 2 for multichannel electrical discharge machining is used with a die-sinking EDM having a Z-axis with no C-axis.

The design of the electrical connections may be further simplified by replacing the current brush assembly with a plug connector assembly 3 for automatic connection. In such a configuration, the connection of the electrode holder 2 to the electrode cable 5 is established with the axial insertion of the electrode holder 2 into the clutch. More specifically, an automatic tool changer (not shown) moves the electrode holder 2 to the machining head 6, where the electrode holder 2 is clamped in a chuck 7 by means of the drawbar. With said lifting movement a plug connector of the electrode holder is inserted in a socket connector which is fixedly and coaxially mounted on the machining head.

In the configuration showed in figure 8, two generator modules 28 are mounted at the left and right of the machining head 6 or on the housing of the machining head 6. One pole of the electrode cables 5 of each module is connected with a current brush assembly 24 by which the current pulses are conducted to the respective slip ring 27. The other poles are connected together to the work piece (not shown). The electrode cables 5 of the embodiment shown in figure 8 are very short, so that the effect of a distortion of the pulses is reduced.

Preferably the components of the central body of the electrode holder for multichannel electrical discharge machining are made modular, i.e. slip rings 27, insulating rings 26 or insulating disks 26, the elements of the internal current supplying circuits 20 and other intermediate and interfacing components are designed in such a way that the electrode holder 1, 2 can be assembled in various configurations and thus extending the number of possible applications.

Preferably the slip rings 27 comprise at least one protrusion to form as linking element a part of the internal current supplying circuit 20; said internal current supplying circuit 20 traverses the central body 15 of the electrode holder vertically, connecting electrically the slip rings 27 with the current feeder sectors 21 on the base of the central body 15. The protrusion respectively linking element is preferably a solid conductor of suitable length or a braid.

The central body 15 of the electrode holder for multichannel electrical discharge machining must be rigid but not particularly accurate, since, as said the current brush assembly 24 comprises springs to press the brushes against the slip rings 23, 27. Thus the manufacturing cost of the multichannel electrode holder 1 according to the invention is comparably low.

The central body 15 must not be accurate due to the fact that the electrodes are machined on the electrode holder 1 itself. Thus only the rigidity of the electrode holder and the accuracy of the referencing elements are important, whereas the accuracy of the central body is not relevant for the manufacturing accuracy.

Preferably, the electrode holder for multichannel electrical discharge machining is provided in a basic configuration for two channels, and comprises further components to form a modular set. In this way the electrode holder 1 for multichannel electrical discharge machining can be assembled to operate with the desired number of channels. Generally said number is between two and four, but the electrode holder according the invention could also be used with a single channel, and, with more than 4 channels.

Preferably, the lowermost layer of the central body 15 is constituted as a terminal insulator disk 25 comprising the desired number of current feeder sectors 21. These sectors 21 are individually contacted by the internal current supplying circuits 20 of the central body 15 for each channel. Preferably the modular set comprises several exchangeable terminal insulator disks 25, each having a certain number of current feeder sectors 21 by which the current pulses are conducted to the clamping sections 22 and thus to the electrodes mounted thereon. For instance the terminal disk 25 illustrated in figure 3 has four current feeder sectors 21 insulated from each other, by which the current is transmitted to the clamping sections 22 and to the electrodes, each sector at an angle of 90° from each other. The embodiments showed and explained in relation to the figures 5, 6, 7 and 8 have on the other hand each two current feeder sectors 21, two clamping sections 22 and two electrodes.

According to a further advantageous embodiment of the invention not shown in the figures, the terminal insulator disk 25 of the electrode holder for multichannel electrical discharge machining could be made configurable, i.e. it is designed to fit for a variable number of electrodes and for the largest possible number of application cases.

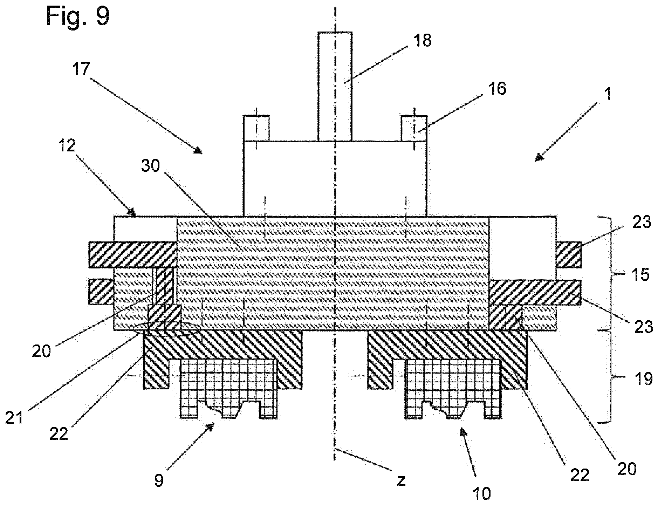

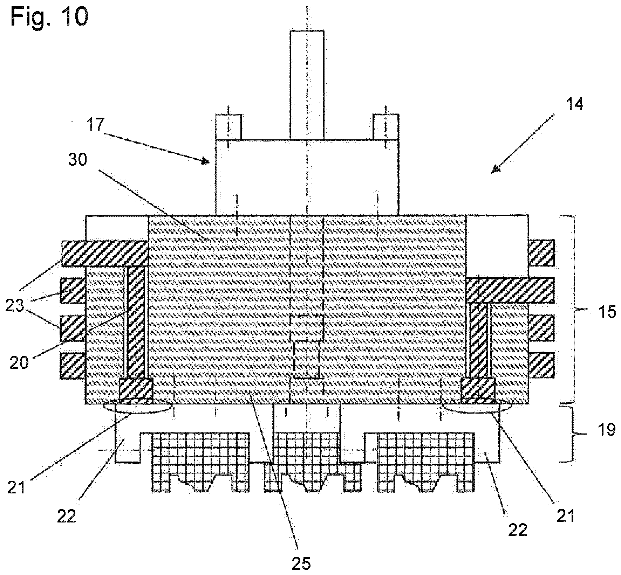

Figures 9 and 10 show further advantageous embodiments of the electrode holder 1 for multichannel electrical discharge machining according to the invention. Here the central body 15 of the electrode holder 1 comprises a monolithic insulating element 30. The holding elements 17 are still are mounted on the top of the central body 15 and an electrode mounting section 19 is still located on the bottom of the central body 15. However in this embodiment the central body 15 itself is no longer constituted by a sequence of axially piled layers, with slip rings 23 separated by insulating discs 26; in this simplified constitution a monolithic insulating element 30 bears the slip rings 23, the internal current supplying circuit 20 and the current feeder sectors 21. Preferably the slip rings 23 comprise at least one protrusion to form as linking element a part of the internal current supplying circuit 20, and the monolithic insulating element 30 comprises a plurality of notches on its periphery to accommodate the at least one protrusion of each slip ring 23, obviously at different notches. For instance the monolithic insulating element 30 may comprise 4 notches distributed on its periphery, at 90° to each other, and each slip ring 23 has one protrusion. In this way the monolithic insulating element 30 can receive respectively bear up to 4 slip rings 23. Preferably the slip rings are inserted axially on the monolithic insulating element. The notches might have different depth so that the slip rings are positioned at a well-defined axial position on the monolithic insulating element 30. Alternatively the notches may be continuous (through-notches), and the slip rings 23 may be axially separated by means of spacers and or by means of the internal current supplying circuit 20.

The central body 15 described in the present embodiment is comparably simple and thus inexpensive, and thanks to the monolithic constitution of the insulating element it is even more rigid. Although the central body 15 comprises a monolithic insulating element 30 the electrode holder 1 still configurable for the desired number of channels, to a certain extent.

Preferably the electrodes 9, 10 are first mounted to the clamping sections 22 of the electrode mounting section 19 of the multichannel electrode holder 1, 2, 14 in the desired configuration, and then they are directly machined altogether on said multichannel electrode holder 1, 2, 14. In this way the relative positional accuracy of the plurality of electrodes mounted is not affected by a clamping operation, but is determined only by the machining accuracy of the machine tool used to prepare the electrodes. Thus also the relative position of the cavities generated by the EDM process is improved.

In another embodiment the multichannel electrode holder bears at least two or more electrodes which are used in sequence with the same work piece. The electrodes are for instance a roughing and a finishing electrode. Here the process is not parallelized; the advantage lies in the fact that the electrodes are mounted on the same electrode holder and fabricated together on a milling machine or WEDM or other machine tool; in this way the accuracy of the process is no longer determined by clamping errors on both milling machine and EDM, but only by the accuracy of the manufacturing processes, and the capacitance is limited because the electrodes are electrically separated.

Obviously it is possible to use a certain configuration of the multichannel electrode holder with a different number of electrodes. For instance, a multichannel electrode holder configured to serve four channels has four separate internal current supplying circuits with four slip rings, four current feeder sectors and four clamping sections. Said multichannel electrode holder configured to serve four channels can also be use with less than four electrodes, i.e. three or two, but also with one single electrode if required. For instance, if said multichannel electrode holder is configured to serve four channels but has only two electrodes, these two electrodes are mounted to separate sectors of electrode mounting section and current pulses are provided to only two slip rings of the current brush assembly.

The present invention discloses a multichannel electrode holder which can be manipulated by means of an ATC with no particular restriction. Although all manufacturers of tooling systems have their own particular design, the multichannel electrode holder according the invention can be used with every specific system, by mounting the specific holding system 17 to the top of the central body 15. Thus it can be manipulated by means of a Robot or an ATC having a suitable gripper.

The multichannel electrode holder disclosed in the present invention may further comprise auxiliary supplying circuits, for instance one or more supplying circuits for the processing liquid and/or compressed air, and/or cabling for sensing means for process monitoring. These auxiliary supplying circuits may be designed to address each individual electrode of the multichannel electrode holder. Here the connection for the processing liquid and compressed air may be common, typically trough the machining head of the EDM machine, or individual.

The present invention is described in relation with an electrical discharge machining process. It is however understood that the same or similar features can be used with other electrical processes, such as electrochemical processes (in particular PECM), with hybrid processes, etc.

The present invention is not limited to the explicitly explained examples and embodiments.

## References

1    Electrode holder
2    Electrode holder
3    Plug connector assembly
4    Current brush support
5    Electrode cable
6    Machine head
7    Chuck
8    Insulating elements
9    Electrode 1
10   Electrode 2
11   Sloped electrode
12   Top surface of the electrode holder
13   Brush
14   Multichannel electrode holder
15   Central body of the electrode holder
16   Referencing elements (Alignment)
17   Holding elements
18   Drawbar
19   Electrode mounting section
20   Internal current supplying circuit
21   Internal current feeder sector
22   Clamping sections
23   Slip ring (rotary current feeder assembly, collector)
24   Current brush assembly (feeding contactors)

25   Terminal insulator disk
26   Insulating ring
27   Slip rings mounted on the top surface
28   Generator module
30   Monolithic insulating element

## Claims

1.  Electrode holder (1, 2, 14) for multichannel electrical discharge machining in electrical discharge machines comprising a holding element (17), a central body (15) and an electrode mounting section (19), the electrode mounting section (19) includes at least two clamping sections (22) for clamping electrodes (9, 10),
    wherein each clamping section (22) is connected, preferably via a current feeder section (21), with an own current supplying circuit (20) leading from the periphery of the electrode holder (1, 2, 14) to the respective electrode clamping section (22),
    whereat the current supply circuits (20) are electrically isolated from each other by one or more insulating elements (8, 12, 25, 26, 30),
    **characterized in that** the electrode holder (1, 2, 14) comprises slip rings (23, 27) allocated at its periphery and **in that**
    the current supplying circuits (20) are allocated in or at the central body (15) of the electrode holder (1, 2, 14), wherein each separate internal current supplying circuit (20) is designed for being connected to a current feeding source (4, 13, 24) by way of a slip ring (23, 27), and the slip rings (23, 27) are separated by insulating rings (26) or separated by insulating disks (25) or hold by a monolithic insulating element (30).

2.  Electrode holder (1, 2, 14) for multichannel electrical discharge machining according to claim 1, wherein the one or more insulating elements (8, 12, 25, 26, 30) form a part of the central body (15).

3.  Electrode holder (1, 2, 14) for multichannel electrical discharge machining according to any of the preceding claims, wherein the slip rings (23, 27) constitute a part of the lateral surface and/or top surface (12) of the electrode holder (1, 2, 14), preferably of the central body (15) of the electrode holder (1, 2, 14).

4.  Electrode holder (1, 2, 14) for multichannel electrical discharge machining according to any of the preceding claims, wherein the electrode holder (1, 2, 14) has an at least partially cylindrical form.

5.  Electrode holder (1, 2, 14) for multichannel electrical discharge machining according to any of the preceding claims, wherein each current supplying circuit (20) of the electrode holder (1, 2, 14) is connected to a current feeder sector (21) located in or on the central body (15), on the electrode mounting section (19) or between the central body (15) and the electrode mounting section (19).

6. Electrode holder (1, 2, 14) for multichannel electrical discharge machining according to claim 5, wherein each current feeder sector (21) comprises a spring loaded current feeder contact aligned with the corresponding electrode clamping section (22) or with the corresponding electrode (9, 10).

7. Electrode holder (1, 2, 14) for multichannel electrical discharge machining according to any of the preceding claims, wherein the insulating rings (26, 25) or the monolithic insulating element (30), and the current supplying circuits (20) are assembled to form the central body (15) of the electrode holder (1, 2, 14) in a modular/configurable way such to define the desired number of channels.

8. Electrode holder (1, 2, 14) for multichannel electrical discharge machining according to any of the preceding claims, comprising the holding elements (17) which are mounted on a top insulating ring (8, 12), followed by at least two slip rings (23), the slip rings (23) being separated from each other by an insulating ring (8), wherein the top insulating ring (8, 12) is thicker than the other insulating ring (8, 26).

9. Die-sinking electrical discharge machine with a multichannel electrode holder (1, 2, 14) according to any of the preceding claims, wherein the die-sinking electrical discharge machine comprises a current brush assembly (24), whereas said current brush assembly (24) comprises a plurality of individual current supplying contactors (13) for the supply of the machining current to a respective slip ring (23, 27).

10. Die-sinking electrical discharge machine with a multichannel electrode holder (1, 2, 14) according to claim 9, wherein the die-sinking electrical discharge machine further includes an automatic tool changer for the exchange of the electrode holders (1, 2, 14), preferably the automatic tool changer is designed to attach the electrode holders (1, 2, 14) to the machine head (6) and to connect therewith the electrode holders (1, 2, 14) with the current brush assembly (24) arranged next to the machine head (6), preferably the connection with the current brush assembly (24) is effected by way of a plug connector assembly (3).

11. Die-sinking electrical discharge machine with a multichannel electrode holder according to claim 9 or 10, **characterized in that** the current supplying contactors (13) are arranged in a row, and that the current supplying contactors (13) are retractable from the contact with the slip rings (23, 27).

12. Die-sinking electrical discharge machine with a multichannel electrode holder (1, 2, 14) according to claim 9 to 11, wherein the current brush assembly (24) is composed of modular/configurable current supplying contactors (13), such as to define the desired number of channels.

13. Die-sinking electrical discharge machine with a multichannel electrode holder (1, 2, 14) according to claim 9 to 12, further comprising two or more generator modules (28), wherein the generator modules (28), are connected to the respective current supplying contactor (3), preferably the generator modules (28) are located next to the machine head (6).

**Patentansprüche**

1. Elektrodenhalter (1, 2, 14) für mehrkanaliges funkenerosives Bearbeiten in Funkenerosionsmaschinen, umfassend ein Halteelement (17), einen Zentralkörper (15) und einen Elektrodenbefestigungsabschnitt (19), wobei der Elektrodenbefestigungsabschnitt (19) wenigstens zwei Klemmabschnitte (22) zum Anklemmen von Elektroden (9, 10) aufweist, wobei jeder Klemmabschnitt (22), vorzugsweise über einen Stromzuführungsabschnitt (21), mit einer eigenen, von der Peripherie des Elektrodenhalters (1, 2, 14) zum jeweiligen Elektrodenklemmabschnitt (22) führenden Stromversorgungsschaltung (20) verbunden ist, wobei die Stromversorgungsschaltungen (20) durch ein oder mehrere Isolierelemente (8, 12, 25, 26, 30) voneinander elektrisch isoliert sind, **dadurch gekennzeichnet, dass** der Elektrodenhalter (1, 2, 14) Schleifringe (23, 27) umfasst, die an seiner Peripherie angeordnet sind, und dadurch, dass Stromversorgungsschaltungen (20) in oder an dem Zentralkörper (15) des Elektrodenhalters (1, 2, 14) angeordnet sind, wobei jede separate interne Stromversorgungsschaltung (20) dafür ausgelegt ist, über einen Schleifring (23, 27) mit einer Stromzuführungsquelle (4, 13, 24) verbunden zu werden, und die Schleifringe (23, 27) durch Isolierringe (26) getrennt sind oder durch Isolierscheiben (25) getrennt sind oder durch ein monolithisches Isolierelement (30) gehalten werden.

2. Elektrodenhalter (1, 2, 14) für mehrkanaliges funkenerosives Bearbeiten gemäß Anspruch 1, wobei die ein oder mehreren Isolierelemente (8, 12, 25, 26, 30) einen Teil des Zentralkörpers (15) bilden.

3. Elektrodenhalter (1, 2, 14) für mehrkanaliges funkenerosives Bearbeiten gemäß einem der vorstehenden Ansprüche, wobei die Schleifringe (23, 27) einen Teil der seitlichen Oberfläche und/oder oberen Oberfläche (12) des Elektrodenhalters (1, 2, 14), vorzugsweise des Zentralkörpers (15) des Elektrodenhalters (1, 2, 14), bilden.

4. Elektrodenhalter (1, 2, 14) für mehrkanaliges funkenerosives Bearbeiten gemäß einem der vorstehenden Ansprüche, wobei der Elektrodenhalter (1, 2, 14) eine wenigstens teilweise zylindrische Form hat.

5. Elektrodenhalter (1, 2, 14) für mehrkanaliges funkenerosives Bearbeiten gemäß einem der vorstehenden Ansprüche, wobei jede Stromversorgungsschaltung (20) des Elektrodenhalters (1, 2, 14) mit einem Stromzuführungsabschnitt (21) verbunden ist, der sich in oder auf dem Zentralkörper (15), auf dem Elektrodenbefestigungsabschnitt (19) oder zwischen dem Zentralkörper (15) und dem Elektrodenbefestigungsabschnitt (19) befindet.

6. Elektrodenhalter (1, 2, 14) für mehrkanaliges funkenerosives Bearbeiten gemäß Anspruch 5, wobei jeder Stromzuführungsabschnitt (21) einen federbelasteten Stromzuführungskontakt umfasst, der mit dem entsprechenden Elektrodenklemmabschnitt (22) oder mit der entsprechenden Elektrode (9, 10) gefluchtet ist.

7. Elektrodenhalter (1, 2, 14) für mehrkanaliges funkenerosives Bearbeiten gemäß einem der vorstehenden Ansprüche, wobei die Isolierringe (26, 25) oder das monolithische Isolierelement (30) und die Stromversorgungsschaltungen (20) derart zusammengesetzt sind, dass sie den Zentralkörper (15) des Elektrodenhalters (1, 2, 14) in einer modularen/konfigurierbaren Weise bilden, um die gewünschte Anzahl von Kanälen zu definieren.

8. Elektrodenhalter (1, 2, 14) für mehrkanaliges funkenerosives Bearbeiten gemäß einem der vorstehenden Ansprüche, umfassend die Halteelemente (17), die auf einem oberen Isolierring (8, 12) montiert sind, gefolgt von wenigstens zwei Schleifringen (23), wobei die Schleifringe (23) durch einen Isolierring (8) voneinander getrennt sind, wobei der obere Isolierring (8, 12) dicker als der andere Isolierring (8, 26) ist.

9. Senkerodiermaschine mit einem Mehrkanal-Elektrodenhalter (1, 2, 14) gemäß einem der vorstehenden Ansprüche, wobei die Senkerodiermaschine eine Strombürstenanordnung (24) umfasst, während die Strombürstenanordnung (24) mehrere einzelne Stromversorgungskontaktstücke (13) für die Zuführung des Bearbeitungsstroms zu einem jeweiligen Schleifring (23, 27) umfasst.

10. Senkerodiermaschine mit einem Mehrkanal-Elektrodenhalter (1, 2, 14) gemäß Anspruch 9, wobei die Senkerodiermaschine ferner einen automatischen Werkzeugwechsler zum Wechseln der Elektrodenhalter (1, 2, 14) aufweist, wobei der automatische Werkzeugwechsler vorzugsweise dafür ausgelegt ist, die Elektrodenhalter (1, 2, 14) am Maschinenkopf (6) anzubringen und damit die Elektrodenhalter (1, 2, 14) mit der neben dem Maschinenkopf (6) angeordneten Strombürstenanordnung (24) zu verbinden, wobei vorzugsweise die Verbindung mit der Strombürstenanordnung (24) über eine Steckverbinderanordnung (3) erfolgt.

11. Senkerodiermaschine mit einem Mehrkanal-Elektrodenhalter gemäß Anspruch 9 oder 10, **dadurch gekennzeichnet, dass** die Stromzuführungskontaktstücke (13) in einer Reihe angeordnet sind und dass die Stromzuführungskontaktstücke (13) aus dem Kontakt mit den Schleifringen (23, 27) zurückziehbar sind.

12. Senkerodiermaschine mit einem Mehrkanal-Elektrodenhalter (1, 2, 14) gemäß Anspruch 9 bis 11, wobei die Strombürstenanordnung (24) aus modularen/konfigurierbaren Stromversorgungskontaktstücken (13) zusammengesetzt ist, um etwa die gewünschte Anzahl von Kanälen zu definieren.

13. Senkerodiermaschine mit einem Mehrkanal-Elektrodenhalter (1, 2, 14) gemäß Anspruch 9 bis 12, ferner zwei oder mehr Generatormodule (28) umfassend, wobei die Generatormodule (28) mit dem jeweiligen Stromversorgungskontaktstück (3) verbunden sind, wobei die Generatormodule (28) vorzugsweise neben dem Maschinenkopf (6) angeordnet sind.

**Revendications**

1. Support d'électrodes (1, 2, 14) pour l'usinage par électro-érosion multicanal dans des machines à électro-érosion comprenant un élément de support (17), un corps central (15) et une section de montage d'électrodes (19), la section de montage d'électrodes (19) comportant au moins deux sections de serrage (22) pour serrer des électrodes (9, 10),
chaque section de serrage (22) étant branchée, de préférence par le biais d'une section d'alimentation en courant (21), à son propre circuit de fourniture de courant (20) allant de la périphérie du support d'électrodes (1, 2, 14) à la section de serrage d'électrode respective (22),
les circuits de fourniture de courant (20) étant isolés électriquement les uns des autres par un ou plusieurs éléments isolants (8, 12, 25, 26, 30),
**caractérisé en ce que**
le support d'électrodes (1, 2, 14) comprend des bagues collectrices (23, 27) réparties à sa périphérie et **en ce que**
les circuits de fourniture de courant (20) sont répartis dans ou sur le corps central (15) du support d'électrodes (1, 2, 14), chaque circuit de fourniture de courant interne séparé (20) étant conçu pour être branché à une source d'alimentation en courant (4, 13, 24) au moyen d'une bague collectrice (23, 27), et les bagues collectrices (23, 27) étant séparées par des bagues isolantes (26) ou séparées par des disques isolants (25) ou maintenues par un élément isolant monolithique (30).

2.  Support d'électrodes (1, 2, 14) pour l'usinage par électro-érosion multicanal selon la revendication 1, dans lequel le ou les éléments isolants (8, 12, 25, 26, 30) forment une partie du corps central (15).

3.  Support d'électrodes (1, 2, 14) pour l'usinage par électro-érosion multicanal selon l'une quelconque des revendications précédentes, dans lequel les bagues collectrices (23, 27) constituent une partie de la surface latérale et/ou la surface supérieure (12) du support d'électrodes (1, 2, 14), de préférence du corps central (15) du support d'électrodes (1, 2, 14).

4.  Support d'électrodes (1, 2, 14) pour l'usinage par électro-érosion multicanal selon l'une quelconque des revendications précédentes, le support d'électrodes (1, 2, 14) ayant une forme au moins partiellement cylindrique.

5.  Support d'électrodes (1, 2, 14) pour l'usinage par électro-érosion multicanal selon l'une quelconque des revendications précédentes, chaque circuit de fourniture de courant (20) du support d'électrodes (1, 2, 14) étant branché à un secteur d'alimentation en courant (21) situé dans ou sur le corps central (15), sur la section de montage d'électrodes (19) ou entre le corps central (15) et la section de montage d'électrodes (19).

6.  Support d'électrodes (1, 2, 14) pour l'usinage par électro-érosion multicanal selon la revendication 5, dans lequel chaque secteur d'alimentation en courant (21) comprend un contact d'alimentation en courant monté sur ressort aligné avec la section de serrage d'électrode correspondante (22) ou avec l'électrode correspondante (9, 10).

7.  Support d'électrodes (1, 2, 14) pour l'usinage par électro-érosion multicanal selon l'une quelconque des revendications précédentes, les bagues isolantes (26, 25) ou l'élément isolant monolithique (30), et les circuits de fourniture de courant (20) étant assemblés pour former le corps central (15) du support d'électrodes (1, 2, 14) de façon modulaire/configurable pour définir le nombre souhaité de canaux.

8.  Support d'électrodes (1, 2, 14) pour l'usinage par électro-érosion multicanal selon l'une quelconque des revendications précédentes, comprenant les éléments de support (17) qui sont montés sur une bague isolante supérieure (8, 12), suivie d'au moins deux bagues collectrices (23), les bagues collectrices (23) étant séparées l'une de l'autre par une bague isolante (8), la bague isolante supérieure (8, 12) étant plus épaisse que l'autre bague isolante (8, 26).

9.  Machine à fraiser les matrices par électro-érosion avec un support d'électrodes multicanal (1, 2, 14) selon l'une quelconque des revendications précédentes, la machine à fraiser les matrices par électro-érosion comprenant un ensemble balai de courant (24), ledit ensemble balai de courant (24) comprenant une pluralité de contacteurs de fourniture de courant individuels (13) pour la fourniture du courant d'usinage à une bague collectrice respective (23, 27).

10. Machine à fraiser les matrices par électro-érosion avec un support d'électrodes multicanal (1, 2, 14) selon la revendication 9, la machine à fraiser les matrices par électro-érosion comportant en outre un changeur d'outils automatique pour l'échange des supports d'électrodes (1, 2, 14), le changeur d'outils automatique étant de préférence conçu pour attacher les supports d'électrodes (1, 2, 14) à la tête de machine (6) et pour y brancher les supports d'électrodes (1, 2, 14) à l'ensemble balai de courant (24) disposé à côté de la tête de machine (6), le branchement à l'ensemble balai de courant (24) étant de préférence effectué au moyen d'un ensemble connecteur mâle (3).

11. Machine à fraiser les matrices par électro-érosion avec un support d'électrodes multicanal selon la revendication 9 ou 10, **caractérisée en ce que** les contacteurs de fourniture de courant (13) sont disposés dans une rangée, et **en ce que** les contacteurs de fourniture de courant (13) sont rétractables du contact avec les bagues collectrices (23, 27).

12. Machine à fraiser les matrices par électro-érosion avec un support d'électrodes multicanal (1, 2, 14) selon les revendications 9 à 11, dans lequel l'ensemble balai de courant (24) est composé de contacteurs de fourniture de courant modulaires/configurables (13), de manière à définir le nombre souhaité de canaux.

13. Machine à fraiser les matrices par électro-érosion avec un support d'électrodes multicanal (1, 2, 14) selon les revendications 9 à 12, comprenant en outre au moins deux modules générateurs (28), les modules générateurs (28) étant branchés au contacteur de fourniture de courant respectif (3), les modules générateurs (28) étant de préférence situés à côté de la tête de machine (6).

## Fig. 1

## Fig. 2

Fig. 3

Fig. 4a

Fig. 4b

Fig. 5

## Fig. 6

## Fig 7

Fig 8

## Fig. 9

Fig. 10

**EP 3 147 063 B1**

**REFERENCES CITED IN THE DESCRIPTION**

**Patent documents cited in the description**

- JP S56157922 A
- US 2783411 A
- DE 19540352

- JP 56157922 B
- EP 2397250 A1
- EP 2361713 A1